# EUROPEAN PATENT APPLICATION

(11) **EP 1 411 030 A1**
(43) Date of publication of application: **21.04.2004**
(21) Application number: 02738757.0
(22) Date of filing: 19.06.2002
(51) Int. Cl.: C01B 31/02, D01F 9/22

(54) **CARBON NANOTUBE AND METHOD FOR PRODUCTION THEREOF**

(30) Priority: 25.06.2001 JP 2001191971; 31.08.2001 JP 2001264706
(71) Applicant: MITSUBISHI CHEMICAL CORPORATION, Chiyoda-ku, Tokyo 100-0005 (JP)
(72) Inventor: OYA, Asao, Kiryu-shi, Gunma 376-0001 (JP); HULICOVA, Denisa, Kiryu-shi, Gunma 376-0052 (JP); KURODA, Shinichi, Kiryu-shi, Gunma 376-0052 (JP)
(74) Representative: HOFFMANN - EITLE
(86) International application number: PCT/JP2002/006084
(87) International publication number: WO 2003/000589

(57) **Abstract**

The carbon nanotube of the present invention has an outer diameter of not more than 500 nm and a length of not less than 50 nm, and comprises a wall which is made of carbon and includes an outside region of an amorphous structure and an inside region of a crystalline structure. The carbon nanotube of the present invention is a novel carbon nanotube which allows functional groups to be readily bonded to the surface thereof since the outside region of the wall has an amorphous structure, and can exhibit a high electrical conductivity and a high strength since the inside region of the wall has a crystalline structure.

## Description

### TECHNICAL FIELD

The present invention relates to a carbon nanotube and a process for producing the carbon nanotube. The "carbon nanotube" described herein means a hollow carbon fiber having an outer diameter of nanometer order and such a structure that a graphite layer (graphene sheet) made of a series of carbon 6-membered rings is rounded into a tubular shape. The carbon nanotube may be applied to electron emission materials, hydrogen-absorbing materials, adsorption-filtering materials, conductive materials, etc.

### BACKGROUND ART

As conventionally known methods for producing carbon nanotubes, there have been proposed arc discharge methods, laser evaporation methods, gas phase methods (thermal CVD methods) or the like. More specifically, the arc discharge methods have been proposed, for example, in Japanese Patent Application Laid-open (KOKAI) Nos. 7-165406 and 7-197325, etc. The laser evaporation methods have been proposed, for example, in Japanese Patent Application Laid-open (KOKAI) No. 10-273308, etc. The gas phase methods (thermal CVD methods) have been proposed, for example, in Japanese Patent Publication (KOKOKU) Nos. 3-64606 and 3-77288, etc.

However, the arc discharge methods and laser evaporation methods suffer from a low productivity and increased production costs, therefore, are unsuitable as a method for mass production of carbon nanotubes. On the other hand, although the gas phase methods are suitable for the mass production of carbon nanotubes, there arises such a problem that since transition metals such as Fe, Co and Ni are used as a catalyst in the production process, these metal components are inevitably mixed in resultant products in as large an amount as several percents by weight, thereby requiring posttreatments for removing the metal components therefrom. Also, in the gas phase methods, there arises such a drawback that side reactions tend to be caused during the production reaction owing to the presence of the metal components, resulting in inclusion of a large amount of amorphous carbon components other than carbon nanotube in the obtained product. Further, in the gas phase methods, in order to control an outer diameter and wall thickness of the carbon nanotube, it is required to use fine metal particles whose size is controlled in a nanometer scale, or to conduct an additional purification step for removal thereof. Therefore, the gas phase methods have problems such as high production costs when applied to the mass production techniques at an industrial level.

In addition, when the carbon nanotubes are used as industrial materials, surface-modification techniques including techniques for introducing functional groups to the surface of carbon nanotubes are important. These surface-modification techniques are considered to be inevitable or essential factors required for achieving not only solubilization in solvents but also improvement of dispersibility in resins and formation of composite materials with functional inorganic materials or biological materials. As one of the techniques for solubilizing the carbon nanotubes by introducing functional groups onto the surface thereof, there is known, for example, J. Chen, M.A. Hamon, H. Hu, Y. Chen, A.P. Rao, P.C. Eklund and R.C. Haddon, "Science", vol. 282, p. 95(1998).

Many known carbon nanotubes have an outer peripheral portion that is formed from a graphene sheet having a cylindrical shape and, therefore, exhibits a high crystallinity. For this reason, it is usually difficult to introduce functional groups to the surface of the carbon nanotubes. The above-exemplified solubilization technique is such a method in which the functional groups are introduced merely to a tip end of the carbon nanotube, but not to the surface of a cylindrical portion of carbon nanotube having a high crystallinity. In such a method of introducing the functional groups only to the tip end of the carbon nanotube, since the number of functional groups which can be introduced to the whole carbon nanotubes is restricted, it may be difficult to sufficiently solubilize elongated carbon nanotubes.

On the other hand, for example, in WO 00/40509, etc., there have been proposed carbon nanotubes having a low crystallinity as a whole. The carbon nanotubes having a low crystallinity as a whole can be synthesized, for example, by the gas phase method using a low temperature. Therefore, it will be expected to allow functional groups to be introduced onto the surface of the carbon nanotubes because of low crystallinity thereof. However, in the case of such carbon nanotubes having a low crystallinity as a whole, since large portions of the carbon nanotubes including even inside portions thereof, are low in crystallinity, it is easily suggested that the carbon nanotubes tend to lose advantages of the high-crystallinity carbon nanotubes such as a high conductivity and a high strength.

Also, for example, in Japanese Patent Publication Nos. 3-64606 and 3-77288, there have been proposed carbon nanotubes containing carbon irregularly arranged therein. In order to introduce the functional groups onto the carbon irregularly arranged inside the carbon nanotubes, it is required to previously treat the carbon nanotubes to open a tip end thereof. Therefore, the above proposal has many technical problems as compared to the methods of introducing the functional groups onto the surface of carbon nanotubes. In addition, even if the functional groups are introduced into the central portion of carbon nanotubes, it is hardly expected that such carbon nanotubes show the same effects (such as solubilization) as those of the carbon nanotubes in which the functional groups are introduced into an outer surface thereof.

In view of the above problems, an object of the present invention is to provide a novel carbon nanotube capable of readily introducing functional groups onto the surface thereof owing to an amorphous outside region of a wall thereof, and exhibiting a high conductivity and a high strength owing to a crystalline inside region of a wall thereof. Also, another object of the present invention is to provide an industrially useful process for producing a carbon nanotube which is conducted by an inexpensive solid phase method, and is capable of producing the carbon nanotube at a high yield and by a mass-production process, readily controlling properties of the obtained carbon nanotube such as outer diameter and thickness, and further producing such carbon nanotube containing substantially no metal components.

### BRIEF DESCRIPTION OF THE DRAWING

Fig. 1 is an explanatory view showing a region used for image analysis in a TEM (transmission electron microscope) image of a carbon nanotube.
Fig. 2 is a schematic explanatory view showing a method for image analysis for evaluating a crystallinity of a wall of the carbon nanotube.
Fig. 3 is a SEM (scanning electron microscope) image (used instead of drawing) showing particles obtained in Example 1 by coating PMM core particles with a carbon precursor resin.
Fig. 4 is a TEM image (used instead of drawing) of carbon nanotubes obtained in Example 1.
Fig. 5 is a TEM image (used instead of drawing) of the carbon nanotubes obtained in Example 1.
Fig. 6 is a TEM image (used instead of drawing) of the carbon nanotubes obtained in Example 1.
Fig. 7 is a TEM image (used instead of drawing) of the carbon nanotubes obtained in Example 2.
Fig. 8 is a SEM image (used instead of drawing) showing particles obtained in Example 3 by freeze-drying a part of a suspension.
Fig. 9 is a TEM image (used instead of drawing) of carbon nanotubes obtained in Example 3.
Fig. 10 is a TEM image (used instead of drawing) of carbon nanotubes obtained in Example 4.
Fig. 11 is a TEM image (used instead of drawing) of the carbon nanotubes obtained in Example 4.
Fig. 12 is a TEM image (used instead of drawing) of the carbon nanotubes obtained in Example 4.
Fig. 13 is a TEM image (used instead of drawing) of the carbon nanotubes obtained in Example 4.
Fig. 14 is an explanatory view showing a region used for image analysis in a TEM image of the carbon nanotube obtained in Example 4.
Fig. 15 is an explanatory view showing a region used for image analysis in a TEM image of the carbon nanotube obtained in Example 4.
Fig. 16 is a graph obtained by the image analysis of the region shown in Fig. 14.
Fig. 17 is a graph obtained by the image analysis of the region shown in Fig. 15.
Fig. 18 is a TEM image (used instead of drawing) of carbon nanotubes obtained in Comparative Example 1.
Fig. 19 is a TEM image (used instead of drawing) of the carbon nanotubes obtained in Comparative Example 1.
Fig. 20 is an explanatory view showing a region used for image analysis in the TEM image of the carbon nanotube obtained in Comparative Example 1.
Fig. 21 is a graph obtained by the image analysis of the region shown in Fig. 20.
Fig. 22 is an explanatory view comparing the graphs obtained by the image analysis of Example 4 and Comparative Example 1 with each other.

### DISCLOSURE OF THE INVENTION

The present invention includes a plurality of related inventive concepts, namely, the following aspects (1) to (6):
(1) A carbon nanotube having an outer diameter of not more than 500 nm and a length of not less than 50 nm, and comprising a wall including an outside region of an amorphous structure and an inside region of a crystalline structure;
(2) a process for producing a carbon nanotube, comprising:
   melt-spinning particles having an average particle diameter of 10 to 10,000 nm and a Cv value of particle diameter of not more than 30% which are prepared by coating heat-decomposable and dissipatable fine resin particles with a carbon precursor resin;
   adequately subjecting the resultant melt-spun product to infusibilization treatment; and
   heat-calcining the obtained product for carbonization treatment thereof;
(3) a process for producing a carbon nanotube, comprising:
   dispersing particles having an average particle diameter of 10 to 10,000 nm and a Cv value of particle diameter of not more than 30% which are prepared by coating heat-decomposable and dissipatable fine resin particles with a carbon precursor resin, in a matrix resin capable of being decomposed and dissipated by heating to prepare a dispersion;
   melt-spinning the obtained dispersion;
   adequately subjecting the resultant melt-spun product to infusibilization treatment; and
   heat-calcining the obtained product for carbonization treatment thereof;
(4) a process for producing a carbon nanotube, comprising:
   chemically coating a surface of heat-decomposable and dissipatable fine resin particles which are produced by chemical growth using a polymerization method, with a carbon precursor resin;
   dispersing the resultant coated particles in a matrix resin capable of being decomposed and dissipated by heating to prepare a dispersion;
   melt-spinning the resultant dispersion;
   adequately subjecting the resultant melt-spun product to infusibilization treatment; and
   heat-calcining the obtained product for carbonization treatment thereof;
(5) a process for producing a carbon nanotube, comprising:
   polymerizing a monomer of a heat-decomposable and dissipatable resin;
   charging and polymerizing a component containing a monomer of a carbon precursor resin;
   further charging and polymerizing a monomer of a heat-decomposable and dissipatable resin to obtain fine particles;
   melt-spinning the obtained fine particles;
   adequately subjecting the resultant melt-spun product to infusibilization treatment; and
   heat-calcining the obtained product for carbonization treatment thereof; and
(6) a process for producing a carbon nanotube, comprising:
   coating heat-decomposable and dissipatable fine resin particles with a carbon precursor resin;
   coating the resultant particles with a heat-decomposable and dissipatable resin;
   melt-spinning the obtained coated particles;
   adequately subjecting the resultant melt-spun product to infusibilization treatment; and
   heat-calcining the obtained product for carbonization treatment thereof.

The carbon nanotube of the present invention has an outer diameter of not more than 500 nm and a length of not less than 50 nm. The outer diameter of the carbon nanotube is preferably not more than 200 nm, more preferably not more than 100 nm. Meanwhile, the lower limit of the outer diameter of the carbon nanotube is usually 1 nm. Also, the length of the carbon nanotube is preferably not less than 10 times the diameter thereof, more preferably not less than 100 times the diameter thereof. Meanwhile, the upper limit of the length of the carbon nanotube is usually 10 cm.

In addition, the carbon nanotube of the present invention includes a wall having an outside region of an amorphous structure and an inside region of a crystalline structure. Here, the "outside region" of the wall of the carbon nanotube means a region of up to 49%, preferably up to 30%, more preferably up to 20% when measured inwardly from an outer surface of the wall in the thickness direction thereof, and the "inside region" of the wall means a region of from 50 to 100%, preferably from 70 to 100%, more preferably from 80 to 100% when measured inwardly from the outer surface of the wall in the thickness direction.

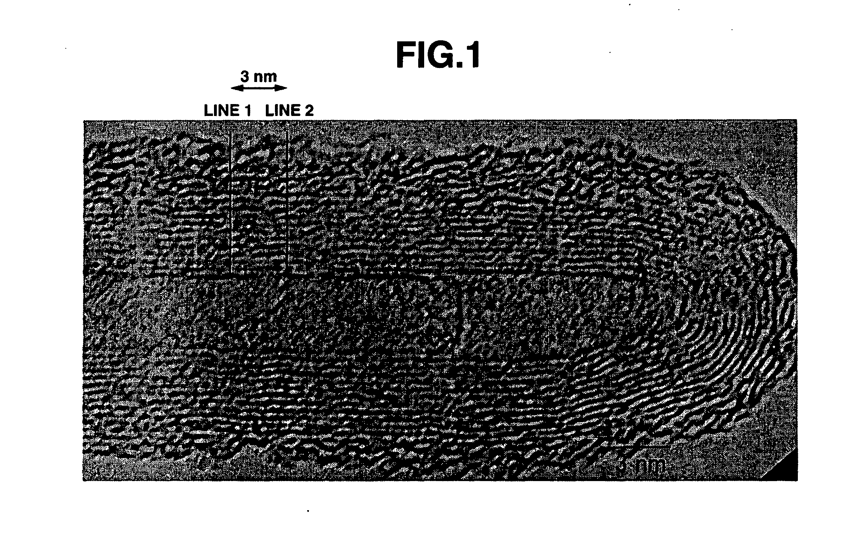

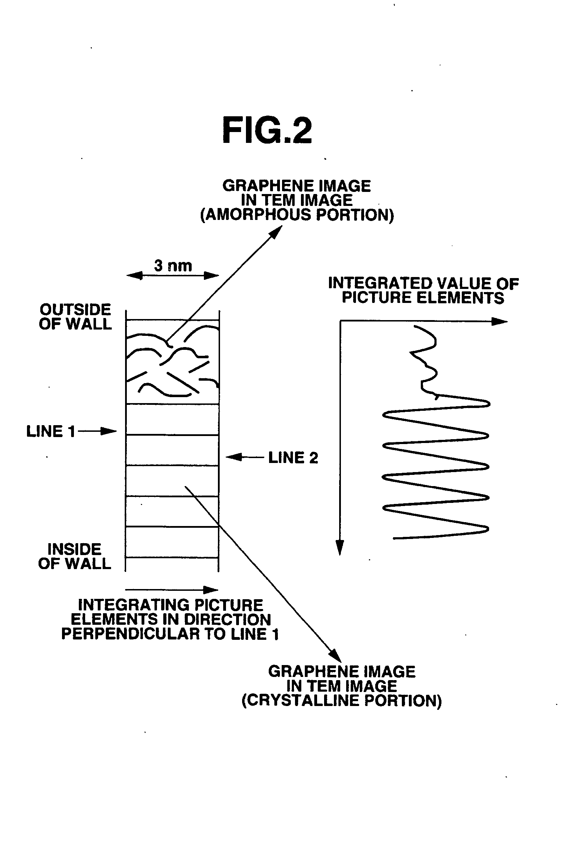

The above structure of the carbon nanotube according to the present invention is characterized in that a ratio of B to A (B/A) or D to C (D/C) thereof is not less than 1.20, preferably not less than 1.40, more preferably not less than 2.00, wherein A, B, C and D are values obtained by an image analysis conducted according to the following procedures using a transmission electron microscope image of the carbon nanotube which has a magnification of not less than 1,000,000 times and a distance between adjacent picture elements of not more than 0.06 nm, and respectively have the following definitions:
(1) Drawing two parallel lines (referred to as "line 1" and "line 2", respectively) on the wall of the carbon nanotube observed on the transmission electron microscope image in the thickness direction of the wall, said lines being spaced by 3 nm from each other (refer to Fig. 1 attached hereto);
(2) plotting a distance (L) extending from a crossing point between the line 1 and an outside surface of the wall in the thickness direction of the wall, on an abscissa, and plotting an integrated value (P) of densities of picture elements existing on a line perpendicular to the line 1 which extends from a point on the line 1 corresponding to the distance (L) plotted on the abscissa until contacting with the line 2, on an ordinate, to prepare a graph showing a relationship between the distance (L) and the integrated value (P) of densities of picture elements (refer to Fig. 2); and
(3) in the above graph, A is defined as an average value of differences between adjacent maximum and minimum values of the integrated value (P) of densities of picture elements in a thickness region of up to 20% when measured inwardly from the outside surface of the wall, and B is defined as an average value of differences of adjacent maximum and minimum values of the integrated value (P) of densities of picture elements in a thickness region of 50 to 100% when measured inwardly from the outside surface of the wall, wherein the average value of differences between adjacent maximum and minimum values means an average value obtained from all differences including a difference (Δ1) between the first maximum value and the minimum value adjacent thereto, a difference (Δ2) between the minimum value and the next maximum value, ··· (Δn); or
(4) further, in the above graph, C is defined as an average value of differences between adjacent maximum and minimum values of the integrated value (P) of densities of picture elements in a thickness region of up to 1.5 nm when measured inwardly from the outside surface of the wall, and D is defined as an average value of differences between adjacent maximum and minimum values of the integrated value (P) of densities of picture elements in a thickness region extending inwardly from 2.0 nm when measured inwardly from the outside surface of the wall.

Fig. 1 shows a transmission electron microscope image of the carbon nanotubes obtained in Example 4 as described below. The magnification of the transmission electron microscope image used for the image analysis as shown in Fig. 1 is 1,600,000 times. It is required that the magnification of the transmission electron microscope image used for the image analysis is not less than 1,000,000 times so as to apparently recognize the graphene sheets in the carbon nanotube. When the magnification of the transmission electron microscope image used for the image analysis is less than 1,000,000 times or when the images of the graphene sheets are unclear even though the magnification is not less than 1,000,000 times, it may not be possible to accurately show a crystallinity of the carbon nanotubes.

In the transmission electron microscope image used for the image analysis as shown in Fig. 1, the number of picture elements existing between the lines 1 and 2 drawn thereon is 75, and the distance between the adjacent picture elements is 0.04 nm. The distance between the adjacent picture elements observed in the transmission electron microscope image used upon the image analysis is preferably not more than 0.06 nm. When the distance between the adjacent picture elements is more than 0.06 nm, namely when the images have a low definition, it may not be possible to accurately show a crystallinity of the carbon nanotubes.

Also, the carbon nanotube is provided at a tip end portion thereof with a region of a peculiar structure which is unsuitable to evaluate a crystallinity of the carbon nanotube as a whole. Therefore, it is required that the image analysis of the wall of the carbon nanotube is conducted in a region other than the tip end portion of the carbon nanotube.

In the case where the wall of the carbon nanotube has a high crystallinity, the graphene sheets constituting the wall are developed in the direction perpendicular to the thickness direction of the wall which direction is consistent with the direction of integration of densities of picture elements. For this reason, when the densities of the picture elements are integrated along the direction of the respective graphene sheets, the integrated value becomes large. Whereas, when the densities of picture elements between the graphene sheets are integrated, the integrated value becomes small.

In the case where the wall of the carbon nanotube has a high crystallinity, the spacing between the thus arranged graphene sheets is about 0.33 nm. Therefore, the relationship between the above distance (L) and the integrated value (P) of densities of picture elements is represented by the graph in which the maximum and minimum values of the integrated value (P) appear periodically, i.e., alternately, and the difference between the maximum and minimum values becomes large. On the contrary, in the case where the wall of the carbon nanotube has a low crystallinity, the graphene sheets are not sufficiently oriented and have a small length, the difference between the maximum and minimum values of the integrated value (P) as obtained by the above image analysis becomes small as compared to that of the region having a high crystallinity. Accordingly, when the differences between the maximum and minimum values in the graph obtained by the above image analysis are compared with each other, it becomes possible to parameterize the difference in crystallinity of the wall of the carbon nanotube and evaluating the crystallinity by comparing the obtained parameters with each other.

The carbon nanotube of the present invention contains transition metals, Group 13 elements and lanthanoid elements in a total amount of preferably not more than 0.5% by weight, more preferably not more than 0.3% by weight, especially preferably not more than 0.1% by weight.

Examples of the transition metals may include Sc, Ti, V, Cr, Mn, Fe, Co, Ni, Y, Zr, Nb, Mo, Ru, Rh, Pd, Ag, Hf, Ta, W, Re, Os, Ir, Pt, Au or the like. Examples of the Group 13 elements may include B, Al, Ga, In or the like. Examples of the lanthanoid elements may include La, Ce, Pr, Nd, Pm, Sm, Eu, Gd, Tb, Dy, Ho, Er, Tm, Yb, Lu or the like.

When the total content of the above elements is not more than 0.5% by weight, the carbon nanotube of the present invention is applicable to a broad range of various composite materials and, therefore, can be used as conductive materials, quantum thin wire elements, superluminal electric elements, ultrahigh density magnetic recording media, carbon membranes, nonlinear optical materials, electron emission materials, electrodes, hydrogen-absorbing materials or the like.

The method for producing the carbon nanotube of the present invention is not particularly restricted as long as the carbon nanotube having the above specific structure can be produced. The following solid phase methods can be recommended.

The first production method is as follows. Namely, particles having an average particle diameter of 10 to 10,000 nm and a Cv value of particle diameter of not more than 30% which are obtained by coating heat-decomposable and dissipatable fine resin particles (hereinafter referred to as "core particles") with a carbon precursor resin, are melt-spun, adequately subjected to infusibilization treatment, and then heat-calcined for carbonization treatment thereof.

The average particle diameter of the core particles may be appropriately selected according to a desired diameter of the finally obtained carbon nanotube in view of the thickness of the coating film composed of the carbon precursor resin, melt-spinning conditions, etc., and is preferably in the range of 50 to 2,000 nm.

The heat-decomposable and dissipatable resin means such resins that are decomposed and gasified with the temperature rise under the below-mentioned heat treatment conditions for the carbonization. More specifically, the resin may be those resins having a decomposition temperature lower than the heat treatment temperature for the carbonization.

Specific examples of the heat-decomposable and dissipatable resin may include olefin-based polymers such as polyethylene, polypropylene and polystyrene; polyesters; diene-based polymers such as polybutadiene and polyisoprene; polyacrylic acid esters or polymers of acrylic acid derivatives such as polymethyl acrylate, polyethyl acrylate and polypropyl acrylate; polymethacrylic acid esters or polymers of methacrylic acid derivatives such as polymethyl methacrylate, polyethyl methacrylate and polypropyl methacrylate; polymers containing hetero-atom or molecule such as polyoxymethylene; or the like. Among these resins, the polymers of methacrylic acid derivatives or the polymers of acrylic acid derivatives are preferred when polymers of acrylonitrile are used as the below-mentioned carbon precursor resin coating material, since both the resins can exhibit a similar spinnability.

As methods of forming the core particles, there may be used a method of forming a polymer solution used as a raw material into particles by a spray dryer, a method of forming particles in a high-speed air flow (impact method), a method of polymerizing a monomer to form particles by chemical growth, or the like. Among these methods, the method of polymerizing a monomer to form particles by chemical growth is preferred since this method can readily control size and properties of particles, resulting in production of uniform particles. Meanwhile, in the case of the methods of forming particles by physical treatments or application of impact force, it may be difficult to control the size and properties of the resultant particles.

The polymerization methods used for producing the core particles may be appropriately selected according to kinds of polymers. Examples of the polymerization methods may include a solution polymerization method, a suspension polymerization method, an emulsion polymerization method, a precipitation polymerization method, a dispersion polymerization method, a reversed phase emulsion polymerization method, a microemulsion polymerization method, a mini-emulsion polymerization method, a soap-free emulsion polymerization method and the like. By appropriately selecting the diameter of the core particles, it is possible to control inner and outer diameters of the obtained carbon nanotube. Therefore, the raw materials and polymerization conditions is preferably selected so as to obtain fine uniform core particles.

Further, the above solution polymerization method is preferably such a solution polymerization method capable of controlling a polymerization degree such as living polymerization, coordination polymerization and metallocene polymerization. In the emulsion polymerization method, since impurity components containing alkali metals such as K and Na which are derived from an emulsifier tend to be mixed in the resultant polymers, it is advantageous to subject the obtained core particles to purification treatments such as dialysis, or the core particles are preferably produced by the soap-free emulsion polymerization method using a polymerization initiator such as ammonium persulfate and potassium persulfate without using the emulsifier.

Examples of the solvent used upon the polymerization may include polar solvents such as water and alcohols, e.g., methanol, ethanol and propanol, as well as other organic solvents such as toluene, xylene, tetrahydrofuran, DMSO and n-methyl pyrrolidone. These solvents may be used singly or in combination of any two or more thereof. Among these solvents, the polar solvents such as water are preferred in view of facilitated separation and recovery treatments, etc.

The polymerization temperature, reaction time and monomer concentration may be appropriately selected according to raw monomers and polymerization method used so as to obtain core particles having the desired shape. For example, in the case of the suspension polymerization, emulsion polymerization, precipitation polymerization, soap-free emulsion polymerization, etc. using the polar solvent such as water, the polymerization temperature thereof is usually not less than 25°C, preferably not less than 40°C, and usually not more than 100°C, preferably not more than 90°C; the polymerization time is usually not less than 5 minutes, preferably not less than 30 minutes, and usually not more than 50 hours, preferably not more than 20 hours; and the monomer concentration in the solvent is usually not less than 0.01% by weight, preferably not less than 0.1% by weight, and usually not more than 50% by weight, preferably not more than 20% by weight, more preferably not more than 10% by weight.

Also, in the case of the living polymerization, reversed phase emulsion polymerization, etc. using the other organic solvent, the polymerization temperature thereof is usually in the range of from 60 to 120°C, preferably not more than 100°C; the polymerization time is usually not less than 5 minutes, preferably not less than 30 minutes, and usually not more than 50 hours, preferably not more than 20 hours; and the monomer concentration in the solvent is usually not less than 0.01% by weight, preferably not less than 0.1% by weight, and usually not more than 50% by weight, preferably not more than 20% by weight, more preferably not more than 10% by weight.

The polymerization initiator may be appropriately selected according to the polymerization method. For example, as the radical initiator, there may be used azo compounds such as azobisisobutylonitrile; inorganic peroxides, e.g., persulfates such as potassium persulfate and ammonium persulfate; metal peroxides such as (C₂H₅)₂BOOC₂H₅ and compounds obtained by replacing the boron atom of (C₂H₅)₂BOOC₂H₅ with Al or Zn; organic peroxides, e.g., acyl peroxides such as benzoyl peroxide, alkyl peroxides such as t-butyl peroxide and cumyl peroxide, peroxy acid esters such as t-butyl peroxalate, or hydroperoxide; or the like.

In addition, as the redox initiator, there may be used aqueous initiators such as hydrogen peroxide-Fe²⁺(Fenton's reagent), persulfate and sulfite, and cumene hydroperoxide-amine-based compound; and non-aqueous initiators such as benzoyl peroxide-dimethyl aniline, and methylethylketone peroxide-cobalt naphthenate.

The above polymerization initiator and redox initiator preferably are those containing no metal. If these initiators contain any metal, the metal content in the carbon nanotube product is adjusted to preferably not more than 0.5% by weight, more preferably not more than 0.1% by weight.

The core particles are preferably produced by the method of polymerizing methyl methacrylate (MMA) because this method makes it possible to produce uniform core particles at a high yield. For example, in the case of the soap-free emulsion polymerization method, the polymerization temperature used therein is usually not less than 50°C, preferably not less than 60°C, and usually not more than 100°C, preferably not more than 90°C; the monomer concentration in the solvent is usually not less than 0.1% by weight, preferably not less than 1% by weight, more preferably not less than 5% by weight, and usually not more than 20% by weight, preferably not more than 15% by weight; and the polymerization time is usually not less than 50 minutes, preferably not less than 1 hour, and usually not more than 20 hours, preferably not more than 15 hours, more preferably not more than 10 hours.

Successively, the core particles obtained by the above method are coated with the carbon precursor resin to produce particles having an average particle diameter of 10 to 10,000 nm and a Cv value of particle diameter of not more than 30%. Upon the above coating process, the carbon precursor resin is applied onto the core particles so as to form a coating layer having a uniform thickness. The average thickness of the carbon precursor resin coating layer formed on the core particles may be appropriately selected according to a desired diameter of the finally obtained carbon nanotube in view of the particle diameter of the core particles, the below-mentioned melt-spinning conditions, etc.

The average thickness of the carbon precursor resin coating layer formed on the core particles is usually not less than 10 nm, preferably not less than 50 nm, and usually not more than 10,000 nm, preferably not more than 2,000 nm. The average particle diameter of the particles obtained by coating the core particles with the carbon precursor resin is preferably 50 to 2,000 nm, and the Cv value of particle diameter thereof is preferably not more than 20%.

The average thickness of the carbon precursor resin coating layer can be statistically determined by observing the section of a microcapsule of the particles having the carbon precursor resin coating layer that may be optionally dyed after forming the coating layer, within the field of view of a TEM (transmission electron microscope) image thereof. Also, the Cv value of particle diameter of the resultant particles can be determined by dividing a standard deviation of particle diameter thereof which can be obtained from the image, light scattering measurement, small angle X-ray scattering (SAXS), etc., by the average particle diameter (represented by %).

Examples of the carbon precursor resin may include polyvinyl chloride, polyvinyl alcohol, polyacrylonitrile, polyimides, polyamides, phenol resins, furan resins, polyoxadiazole, poly-p-phenylene vinylene, polyvinylidene chloride, liquid crystal high-molecular compounds or the like. Among these resins, preferred are those resins having not a three dimensional structure but a linear structure such as polyacrylonitrile, polyvinyl chloride and polyvinyl alcohol, since these resins can promote development of crystals. In addition, copolymer resins obtained by copolymerizing a monomer of these carbon precursor resins with a monomer of the heat-decomposable and dissipatable resin may also be used as the carbon precursor resin.

The carbon precursor resin may be coated on the core particles by known coating methods. Since the thickness of the carbon nanotube is controlled by the thickness of the carbon precursor resin coating layer, it is preferable to use the coating method capable of forming the carbon precursor resin coating layer having a uniform thickness. More specifically, the coating may be performed by physical methods such as a method of immersing the core particles in a solution or dispersion of the carbon precursor resin, and a method of mechanically mixing the core particles with the carbon precursor resin, or chemical methods using a polymerization method. Among these coating methods, the method of chemically growing the coating layer by a polymerization method is preferable from the viewpoint of formation of a uniform coating layer.

When the carbon precursor resin coating layer is chemically grown on the core particles by a polymerization method, in order to efficiently conduct the chemical growth of a uniform coating layer, polarities of the core particles and the resin forming the coating layer are preferably close to each other so as to promote polymerization growth of the carbon precursor resin coating layer on the core particles in a common poor solvent. Further, the carbon precursor resin may be preferably selected from those having a higher hydrophilicity than that of the core particles. For this reason, it is preferred that polymers of methacrylic acid derivatives, polymers of acrylic acid derivatives, polystyrene, etc., are used as the core particles, and polyacrylonitrile, polyvinyl chloride, polyvinyl alcohol, etc., are used as the carbon precursor resin. Further, as the preferred carbon precursor resin, there may also be used copolymers of acrylonitrile, vinyl chloride monomer, vinyl acetate, etc., with methacrylic acid derivatives, acrylic acid derivatives, styrene, etc. Meanwhile, the core particles are not necessarily divided or separated into individual particles prior to forming the carbon precursor resin coating layer thereon, and the core particles dispersed in a solvent may be directly used to form the carbon precursor resin coating layer thereon.

In the case where the particles obtained by polymerizing a methyl methacrylate monomer are used as the core particles, the carbon precursor resin in the form of a thin coating layer can be efficiently grown on the surface of the core particles by copolymerizing acrylonitrile (AN) with methyl methacrylate (MMA) under the following conditions. That is, the polymerization temperature used therein is usually not less than 50°C, preferably not less than 60°C, and usually not more than 100°C, preferably not more than 90°C; the monomer concentration in the solvent is usually not less than 0.01% by weight, preferably not less than 0.1% by weight, more preferably not less than 0.2% by weight, and usually not more than 20% by weight, preferably not more than 15% by weight; and the polymerization time is usually not less than 5 minutes, preferably not less than 50 minutes, and usually not more than 20 hours, preferably not more than 15 hours, more preferably not more than 10 hours.

Next, in the present invention, the particles coated with the carbon precursor resin are dried and then melt-spun. The method for spinning the particles is not particularly restricted, and may include a melt-spinning method using an ordinary winding method as well as other spinning methods in which fibers are wound up by air flow, centrifugal force, electrostatic force, etc.

When the particles are melt-spun, the carbon precursor resin is stretched and elongated to extremely thin fibers in the fiber axis direction. In this case, the outer diameter and wall thickness of the carbon nanotube can be controlled by varying the stretch ratio. Therefore, in order to obtain a carbon nanotube having a uniform quality at a high yield, it is important to keep the spinning conditions such as fiber diameter and stretch ratio constant.

In addition, in the present invention, the respective raw materials including the core particles and the carbon precursor resin preferably have such a spinning property that they can be melt-spun into fibers having a length of not less than 5 cm under the same conditions (under actual melt-spinning conditions). Namely, in order to achieve reduction in diameter of the carbon nanotube, more specifically reduce the outer diameter thereof to not more than 500 nm, it is important to appropriately select these raw materials. The proper selection of the raw materials allows the particles obtained therefrom to be stretched and elongated along the fiber axis direction in an extremely suitable manner, thereby achieving reduction in diameter of the resultant carbon nanotube. More preferably, the respective raw materials have such a spinning property that they can be melt-spun into fibers having a length of not less than 10 cm.

The actual melt-spinning conditions may be determined in view of the spinning property of the respective raw materials. More specifically, the spinning properties of the respective raw materials are measured in the above ranges of the actual melt-spinning conditions such as nozzle orifice diameter, spinning velocity and spinning temperature, and the specific ranges of the actual melt-spinning conditions can be selected as such common ranges in which the respective raw materials are capable of achieving the above spinning property, namely, such that the raw materials can be melt-spun into fibers having a length of not less than 5 cm.

The melt-spinning conditions may be appropriately selected according to the spinning property of the respective raw materials and the respective spinning methods used. In the case of the winding-up method, ordinary conditions used therein may include a nozzle orifice diameter of about not less than 0.01 and not more than 5 mm, a spinning velocity of not less than 1 m/min and not more than 5,000 m/min, and a spinning temperature of about not less than 40 not more than 400°C. These spinning conditions may be appropriately determined in view of the below-mentioned spinning properties of the respective raw materials.

Next, in the present invention, the above-obtained fibers are adequately subjected to an infusibilization treatment. The infusibilization treatment is not particularly restricted, and may be conducted by ordinary methods. For example, in the case where the polymers of acrylonitrile are used as the carbon precursor resin, the fibers may be subjected to oxidation treatment at a temperature of about 160 to 250°C in air or oxygen. In this case, more specifically, the fibers may be treated at 250°C in a dried air atmosphere for about 5 hours (heated at a temperature rise rate of 5°C/min over the range of from room temperature to 150°C and at a temperature rise rate of 0.5°C/min over the range of from 150 to 250°C). Alternatively, the fibers may be treated at 220°C in a pure oxygen atmosphere for about 3 hours (heated at a temperature rise rate of 5°C/min over the range of from room temperature to 150°C and at a temperature rise rate of 1°C/min over the range of from 150 to 220°C).

Next, in the present invention, the thus infusibilized fibers are subjected to carbonization treatment by heat-calcining the fibers at a high temperature. In general, the carbonization treatment is performed at a temperature of usually 500 to 2,500°C in an inert atmosphere such as nitrogen and argon. In the present invention, the carbonization treatment may be performed while keeping the reaction system at a temperature of usually 500 to 1,500°C, preferably 900 to 1,200°C for usually 0 to 24 hours. The temperature rise rate used upon the heat-calcination is usually not less than 0.1°C/min, preferably not less than 1°C/min, and usually not more than 100°C/min, preferably not more than 40°C/min.

The second production process of the present invention is as follows. That is, the particles obtained in the above first production process by coating the core particles with the carbon precursor resin which have an average particle diameter of 10 to 10,000 nm and a Cv value of particle diameter of not more than 30%, are dispersed in a matrix resin capable of being decomposed and dissipated by heating to prepare a dispersion. Successively, the resultant dispersion is melt-spun, adequately infusibilized, and then heat-calcined for the carbonization treatment.

The matrix resin means such a resin capable of being decomposed and dissipated under heat treatment conditions for the carbonization treatment. More specifically, the matrix resin may be such a polymer having a decomposition temperature lower than the carbonization temperature. Specific examples of the matrix resin may include those resins exemplified above for the core particles.

Also, the matrix resin and the resin for the core particles may be identical to each other or may be in combination of different kinds of resins. However, when the resin for the core particles is the same as the matrix resin, the process for production of the carbon nanotube can be simplified, resulting in industrially advantageous process.

The particles obtained by coating the surface of the core particles with the carbon precursor resin may be dispersed in the matrix resin in an amount of usually not less than 5 parts by weight, preferably not less than 10 parts by weight, more preferably not less than 20 parts by weight, and usually not more than 1,000 parts by weight, preferably not more than 500 parts by weight, more preferably not more than 200 parts by weight based on 100 parts by weight of the matrix resin.

As the dispersing method, there may be used known methods. More specifically, a suspension containing the particles obtained by coating the surface of the core particles with the carbon precursor resin, or those obtained by subjecting the suspension containing the particles obtained by coating the surface of the core particles with the carbon precursor resin to decantation, separation by filtration, centrifugal separation or dialysis treatment, or mixtures thereof, may be dispersed in the matrix resin.

The melt-spinning, adequate infusibilization treatment and carbonization treatment may be performed by the same methods as described in the above first production method.

In the second production method, the respective raw materials including the core particles, the carbon precursor resin and the matrix resin have such a spinning property that these materials can be melt-spun into fibers having a length of preferably not less than 5 cm, more preferably not less than 10 cm under the same conditions (under the actual melt-spinning conditions).

The third production process of the present invention is characterized in that "after chemically coating the surface of heat-decomposable and dissipatable fine resin particles which are produced by chemical growth using a polymerization method, with the carbon precursor resin, the obtained coated particles are dispersed in the matrix resin capable of being decomposed and dissipated by heating to obtain a dispersion, and the obtained dispersion is melt-spun, adequately infusibilized and then heat-calcined for the carbonization treatment", as already described in the above previous production processes.

The fourth production process of the present invention is as follows. That is, after polymerizing a monomer of the heat-decomposable and dissipatable resin, a component containing a monomer of the carbon precursor resin is charged and polymerized. Successively, the monomer of the heat-decomposable and dissipatable resin is further charged and polymerized to obtain fine particles. The thus obtained fine particles are melt-spun, adequately infusibilized and then heat-calcined for the carbonization treatment.

As the heat-decomposable and dissipatable resin and the carbon precursor resin which are used in the fourth production process, there may be used the same resins as described in the above first production process. Also, as the polymerization method used in the fourth production process, there may be used the same polymerization method as described in the first production process. Thus, the specific carbon nanotube according to the present invention can also be produced by using the fine particles obtained by sequentially charging the respective monomers and polymerizing the monomers at multiple stages, and subjecting the thus obtained fine particles to melt-spinning, adequate infusibilization treatment and then heat-calcination for the carbonization treatment. In addition, the melt-spinning, adequate infusibilization treatment and carbonization treatment of the fourth production process may be respectively performed by the same methods as described in the first production process.

The fifth production process of the present invention is as follows. That is, after coating the heat-decomposable and dissipatable resin particles with the carbon precursor resin, the obtained coated particles are further coated with the heat-decomposable and dissipatable resin. Then, the thus obtained coated particles are melt-spun, adequately infusibilized and then heat-calcined for the carbonization treatment.

In the fifth production process, the procedures until coating the heat-decomposable and dissipatable fine resin particles with the carbon precursor resin may be performed by the same methods as described in the first production process. As the heat-decomposable and dissipatable resin which is further applied onto the coated particles in the subsequent step, there may be used the same resins as those for the core particles described in the first production process. In addition, as the coating method, there may also be used the same method as used for coating with the carbon precursor resin in the first production process. Further, the melt-spinning, adequate infusibilization treatment and carbonization treatment may be performed by the same methods as described in the first production process.

In the above production processes, the particles obtained by coating the surface of the core particles with the carbon precursor resin as well as the core particles and the matrix resin are preferably washed with distilled water, etc., before and/or after separation and dialysis treatments to remove impurities such as polymerization initiator therefrom.

### PREFERRED EMBODIMENT FOR CARRYING OUT THE INVENTION

The present invention is described in more detail with reference to the following examples, but these examples are only illustrative and not intended to limit the scope of the present invention thereto. Meanwhile, the ratio of B to A (B/A) and ratio of D to C (D/C) defined in the present specification were determined from the transmission electron microscope image of the carbon nanotube which had a magnification of 1,600,000 times and a distance between adjacent picture elements of 0.04 nm, by the method as defined herein.

### Example 1:

35 ml of a MMA monomer and 35 mg of potassium persulfate (hereinafter referred to as "KPS") as a radical polymerization initiator were added to 350 ml of deionized water and mixed together, and the resultant mixture was bubbled with a nitrogen gas for 30 minutes. Thereafter, the mixture was reacted at 70°C for 4.5 hours and then at 80°C for 30 minutes while stirring at 300 rpm, thereby obtaining a suspension containing PMMA core particles.

90 ml of the thus obtained suspension was mixed with 4 ml of an acrylonitrile monomer, 5 mg of KPS and 270 ml of deionized water, and the resultant mixture was bubbled with a nitrogen gas for 30 minutes. Thereafter, the mixture was reacted at 70°C for 7.5 hours and then at 80°C for 30 minutes while stirring at 300 rpm, thereby obtaining a suspension containing PMMA core particles coated with a carbon precursor resin.

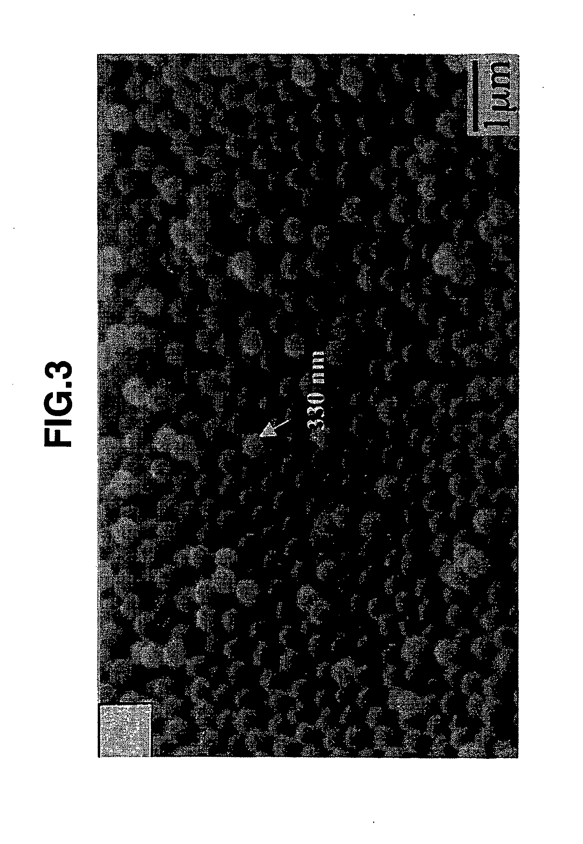

In Fig. 3, there is shown a SEM (scanning electron microscope) image (used instead of drawing) of average particles obtained by freeze-drying a part of the suspension. As a result of the visual observation of Fig. 3, it was confirmed that the thus obtained particles had an average particle diameter of 330 nm and a Cv value of particle diameter of about 15%.

The suspension containing the PMMA core particles as a matrix resin and the suspension containing the PMMA particles coated with the carbon precursor resin were mixed with each other at a weight ratio of 4:6. Thereafter, the resultant mixture was equalized with an ultrasonic wave for 30 minutes and then freeze-dried to obtain particles. The thus obtained particles were melt-spun at a temperature of 310 to 320°C using a spinning apparatus having a nozzle orifice diameter of 0.5 mm at a spinning velocity of about 10 m/min, thereby obtaining fibers.

The thus obtained fibers were held in dried air at 250°C for 5 hours (after heating at a temperature rise rate of 5°C/min up to 150°C and then at a temperature rise rate of 0.5°C up to 250°C) to subject the fibers to infusibilization treatment. Thereafter, the fibers were further heated at a temperature rise rate of 5°C/min in a nitrogen atmosphere and held at 1,000°C for one hour for carbonization treatment thereof, so that both the core particles and the matrix resin were decomposed and dissipated to obtain carbon nanotubes.

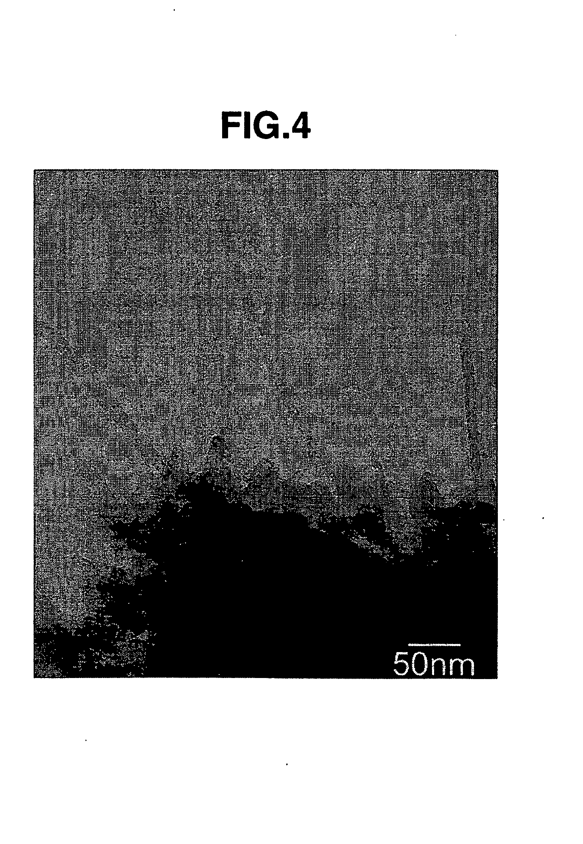

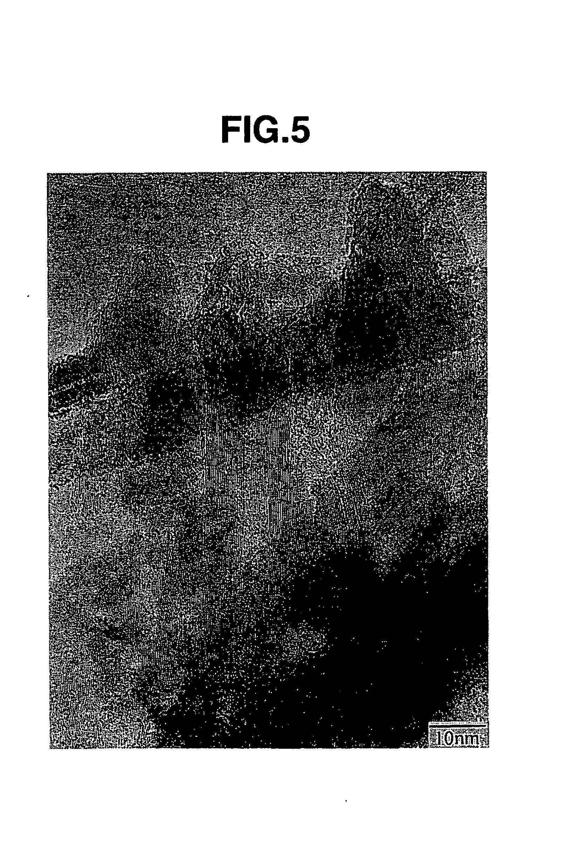

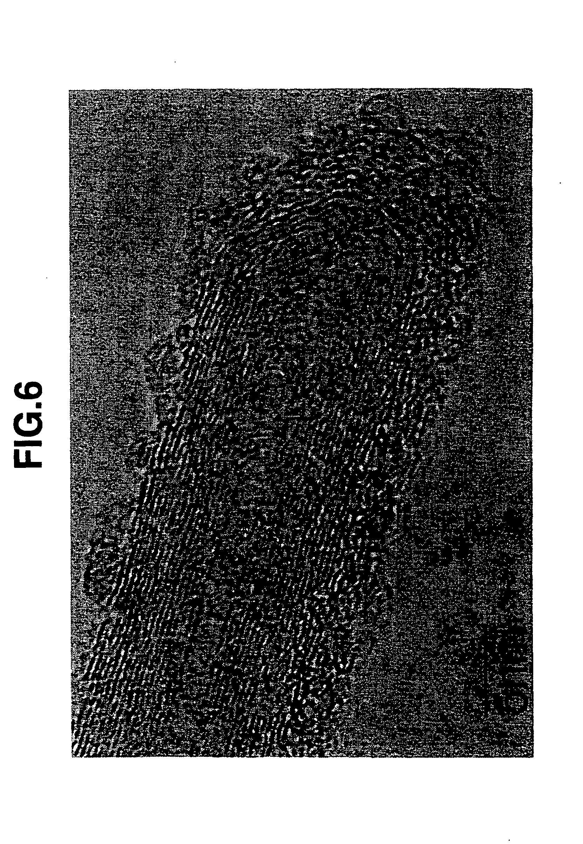

It was confirmed that the thus obtained carbon nanotubes had an average particle diameter of 15.4 nm, an average central cavity diameter of 1.4 nm and an average wall thickness of 7 nm. The TEM images (used instead of drawing) of the obtained carbon nanotubes are shown in Figs. 4 to 6. As a result of observing these TEM images, it was confirmed that the wall of the respective carbon nanotubes had an outside region of an amorphous structure and an inside region of a crystalline structure made of graphene sheets. Further, in the images, there were observed no shades due to metals contained in the carbon nanotubes. In addition, in the images, there were observed images showing the inclusion of amorphous carbon other than the carbon nanotubes.

### Example 2:

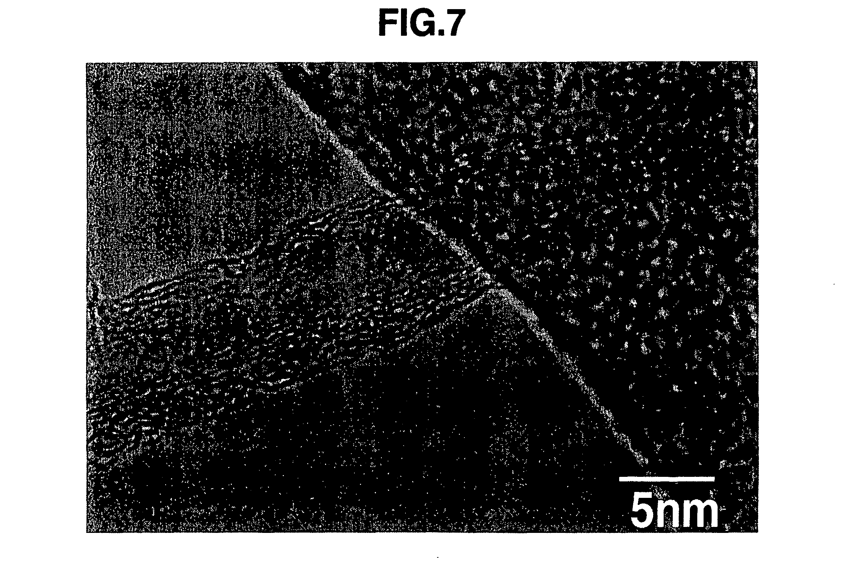

The same procedure as defined in Example 1 was conducted except that the acrylonitrile added upon polymerization for production of the carbon precursor resin was used in an amount of 2 ml, and the carbonization treatment was performed at 900°C for 30 minutes, thereby producing carbon nanotubes. As a result, it was confirmed that the thus obtained carbon nanotubes had an average particle diameter of 10 nm, an average central cavity diameter of 2.4 nm and an average wall thickness of about 4 nm. The TEM image (used instead of drawing) of the obtained average carbon nanotubes is shown in Fig. 7. As a result of observing the TEM image, it was confirmed that the wall of the respective carbon nanotubes had an outside region of an amorphous structure and an inside region of a crystalline structure made of graphene sheets. In addition, in the image, there were observed no shades due to metals contained in the carbon nanotubes, and there were further observed images showing the inclusion of amorphous carbon other than the carbon nanotubes.

### Example 3:

35 ml of a MMA monomer and 35 mg of KPS as a radical polymerization initiator were added to 350 ml of deionized water and mixed together, and the resultant mixture was bubbled with a nitrogen gas for 30 minutes. Thereafter, the mixture was reacted at a temperature of 70 to 80°C for 8 hours while stirring at 300 rpm, thereby obtaining a suspension containing PMMA particles.

90 ml of the thus obtained suspension was mixed with 2 ml of an acrylonitrile monomer, 5 mg of KPS and 260 ml of deionized water, and the resultant mixture was bubbled with a nitrogen gas for 30 minutes. Thereafter, the mixture was reacted at a temperature of 70 to 80°C for 8 hours while stirring at 300 rpm, thereby obtaining a suspension containing PMMA core particles coated with a carbon precursor resin.

350 ml of the thus obtained suspension was mixed with 35 ml of a MMA monomer, 5 mg of KPS and 350 ml of deionized water, and the resultant mixture was bubbled with a nitrogen gas for 30 minutes. Thereafter, the mixture was reacted at a temperature of 70 to 80°C for 8 hours while stirring at 300 rpm, thereby obtaining a suspension.

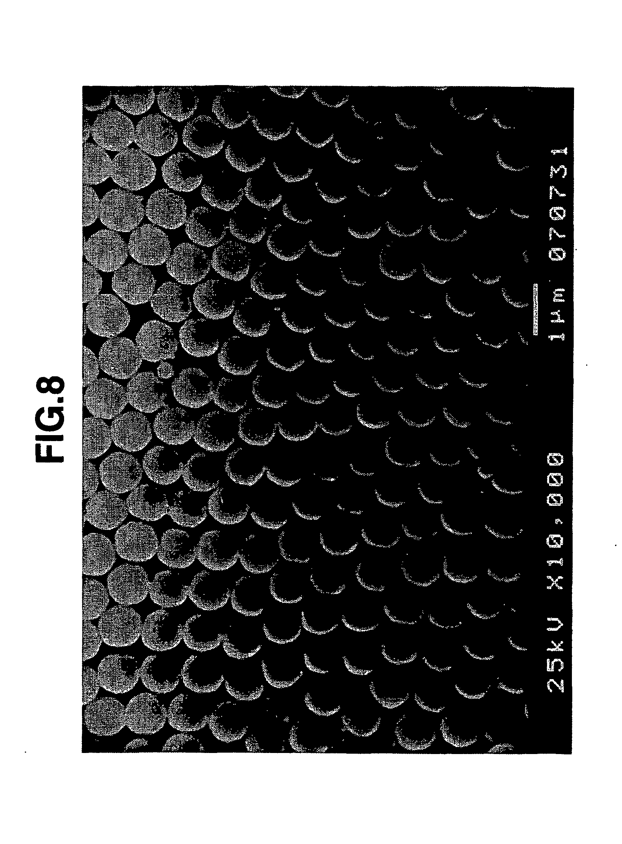

In Fig. 8, there is shown a SEM image (used instead of drawing) of particles obtained by freeze-drying a part of the suspension. As a result of the visual observation of the SEM image, it was confirmed that the thus obtained particles had an average particle diameter of 770 nm and a Cv value of particle diameter of about 15%.

The above particles were freeze-dried, and the resultant powder was melt-spun at about 300°C in an argon gas atmosphere using a spinning apparatus having a nozzle orifice diameter of 0.5 mm at a spinning velocity of about 60 m/min, thereby obtaining fibers.

The thus obtained fibers were held in a pure oxygen atmosphere at 220°C for 3 hours (after heating at a temperature rise rate of 5°C/min up to 150°C and then at a temperature rise rate of 1°C up to 220°C) to subject the fibers to infusibilization treatment. Thereafter, the fibers were heated at a temperature rise rate of 5°C/min in a nitrogen atmosphere and held at 1,000°C for 30 minutes for carbonization treatment thereof, so that the heat-decomposable and dissipatable polymers were decomposed and dissipated, thereby obtaining carbon nanotubes.

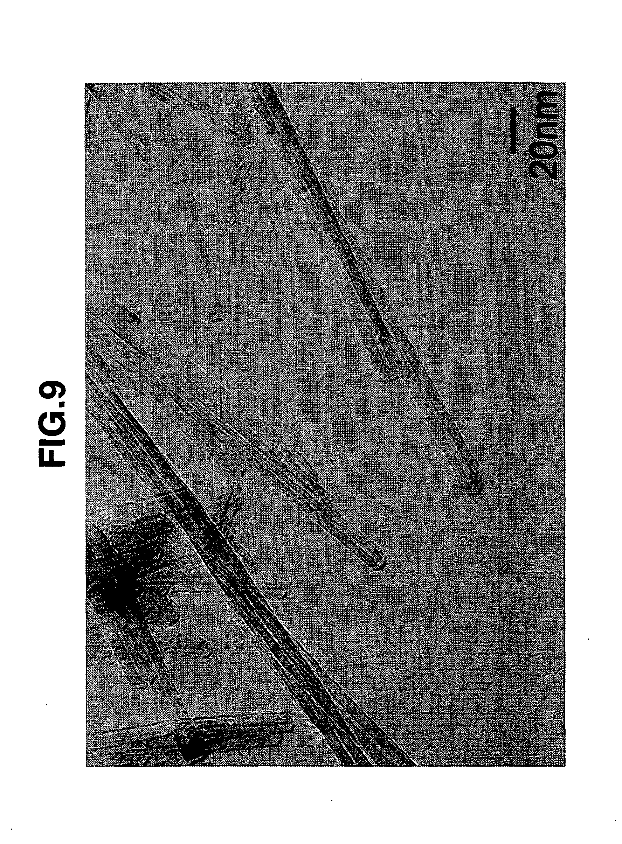

It was confirmed that the thus obtained carbon nanotubes had an average particle diameter of 11 nm, an average central cavity diameter of 1.4 nm and an average wall thickness of 5 nm. The TEM image (used instead of drawing) of the obtained carbon nanotubes is shown in Fig. 9. As a result of observing the TEM image, it was confirmed that the wall of the respective carbon nanotubes had an outside region of an amorphous structure and an inside region of a crystalline structure made of graphene sheets. Further, in the image, there were observed no shades due to metals contained in the carbon nanotubes. In addition, in the image, there were observed images showing the inclusion of amorphous carbon other than the carbon nanotubes.

### Example 4:

35 ml of a MMA monomer and 35 mg of KPS as a radical polymerization initiator were added to 350 ml of deionized water and mixed together, and the resultant mixture was bubbled with a nitrogen gas for 30 minutes. Thereafter, the mixture was reacted at a temperature of 70 to 80°C for 8 hours while stirring at 300 rpm, thereby obtaining a suspension containing PMMA core particles.

90 ml of the thus obtained suspension was mixed with 3 ml of an acrylonitrile monomer, 1 ml of methyl methacrylate, 5 mg of KPS and 260 ml of deionized water, and the resultant mixture was bubbled with a nitrogen gas for 30 minutes. Thereafter, the mixture was reacted at a temperature of 70 to 80°C for 8 hours while stirring at 300 rpm. Then, 350 ml of the resultant suspension was mixed with 24 ml of a MMA monomer, 35 mg of KPS and 350 ml of deionized water, and the obtained mixture was bubbled with a nitrogen gas for 30 minutes. Thereafter, the mixture was reacted at a temperature of 70 to 80°C for 8 hours while stirring at 300 rpm, thereby obtaining a suspension containing fine particles

The above suspension was freeze-dried, and the resultant powder was melt-spun at about 300°C in an argon gas atmosphere using a spinning apparatus having a nozzle orifice diameter of 0.5 mm at a spinning velocity of about 60 m/min, thereby obtaining fibers.

The thus obtained fibers were held in a pure oxygen atmosphere at 220°C for 4 hours (after heating at a temperature rise rate of 5°C/min up to 150°C and then at a temperature rise rate of 1°C up to 220°C) to subject the fibers to infusibilization treatment. Thereafter, the fibers were heated at a temperature rise rate of 5°C/min in a nitrogen atmosphere and held at 1,000°C for 30 minutes for carbonization treatment thereof, so that the heat-decomposable and dissipatable polymers were decomposed and dissipated, thereby obtaining carbon nanotubes.

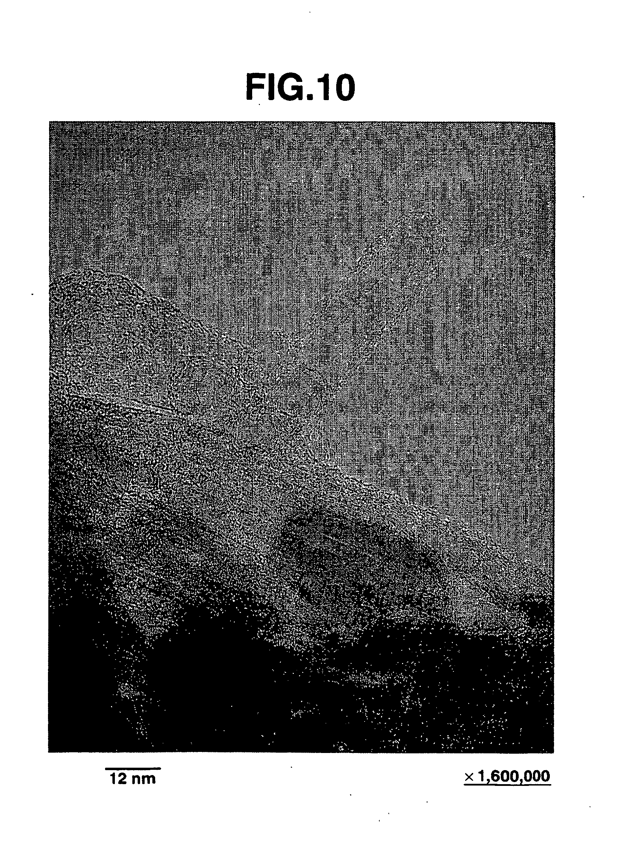

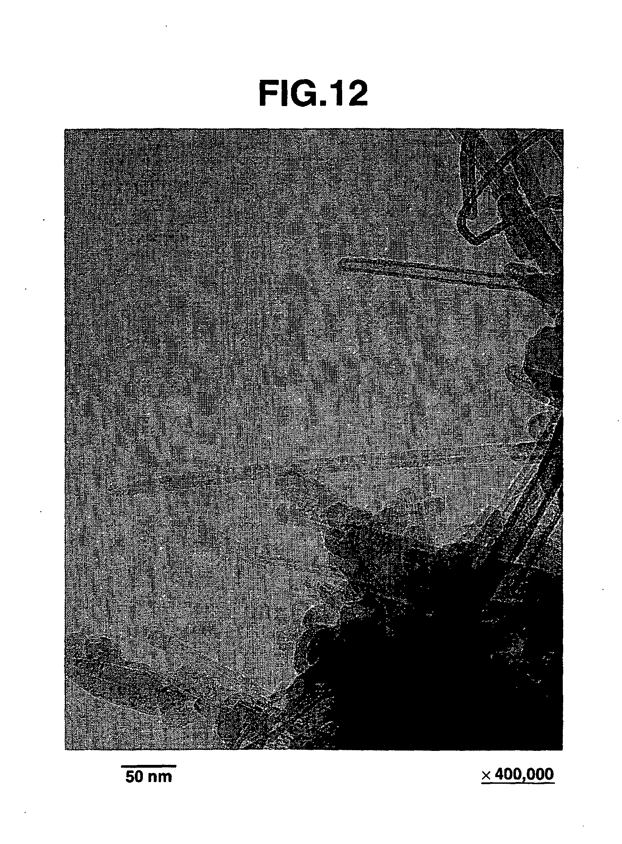

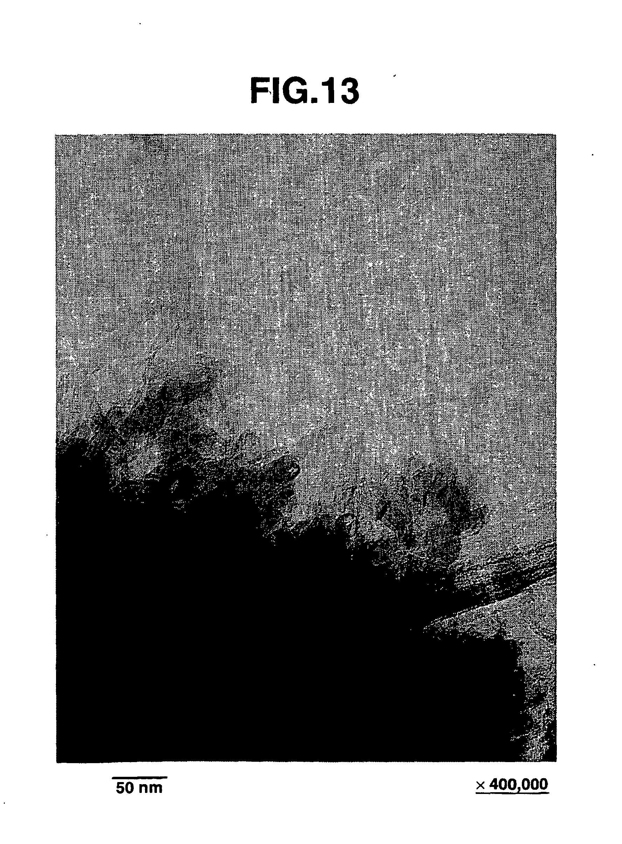

It was confirmed that the thus obtained carbon nanotubes had an average particle diameter of 15 nm, an average central cavity diameter of 3 nm and an average wall thickness of 6 nm. The TEM images (used instead of drawing) of the obtained carbon nanotubes are shown in Figs. 10 to 13. As a result of observing these TEM images, it was confirmed that the wall of the respective carbon nanotubes had an outside region of an amorphous structure and an inside region of a crystalline structure made of graphene sheets. Further, in the images, there were observed no shades due to metals contained in the carbon nanotubes. In addition, in the images, there were observed images showing the inclusion of amorphous carbon other than the carbon nanotubes.

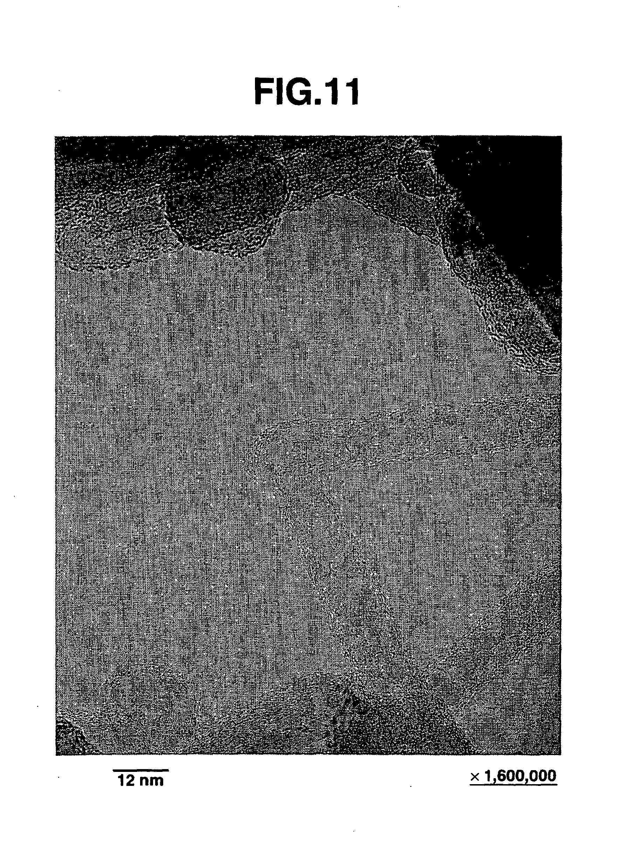

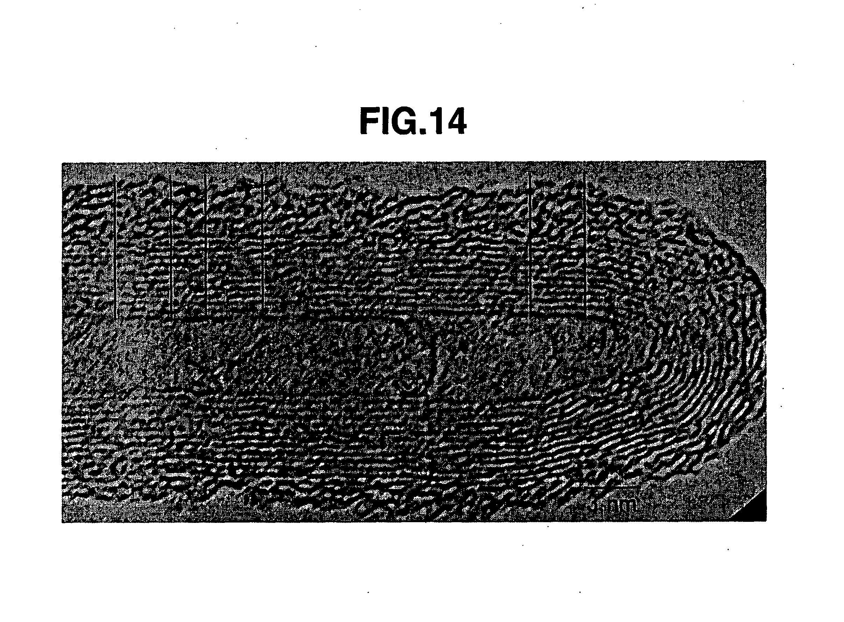

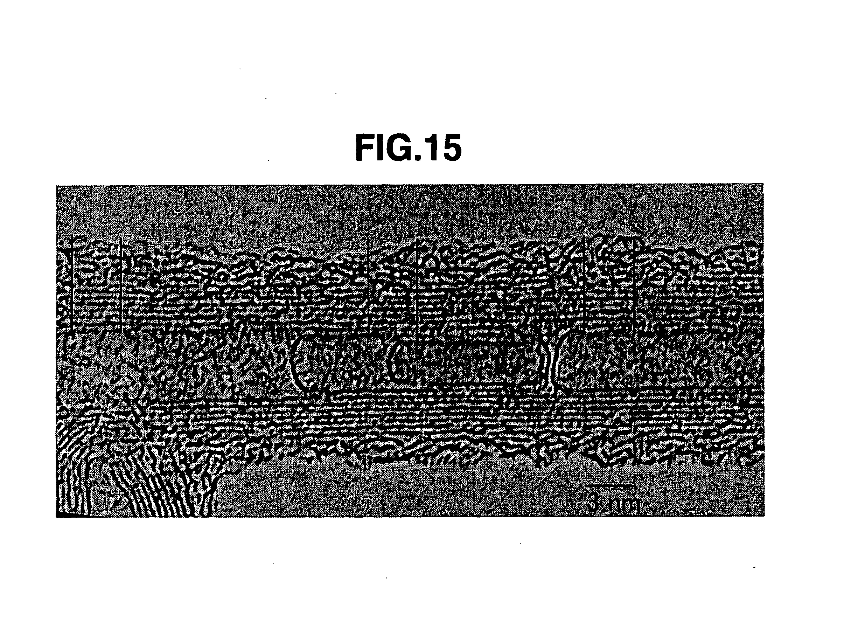

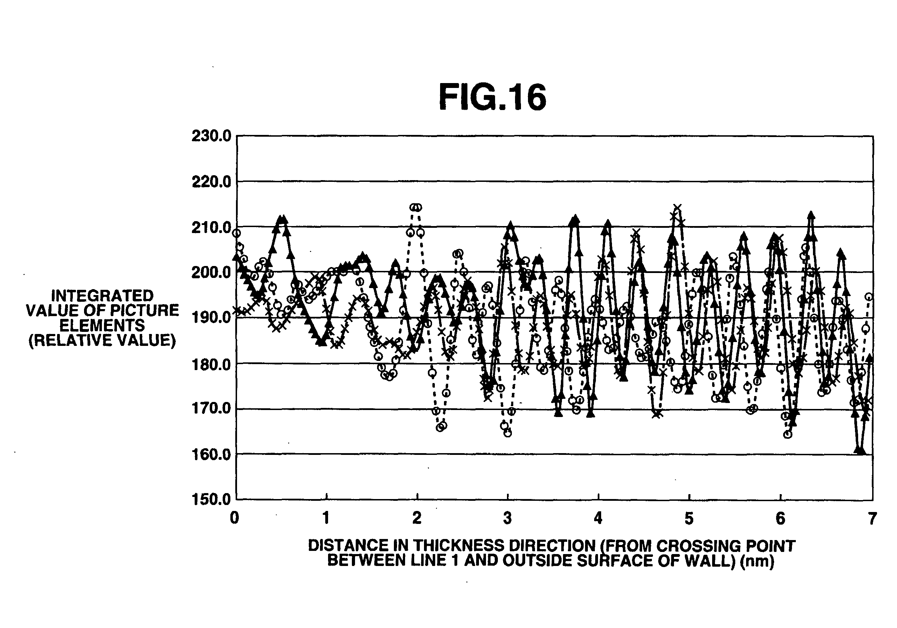

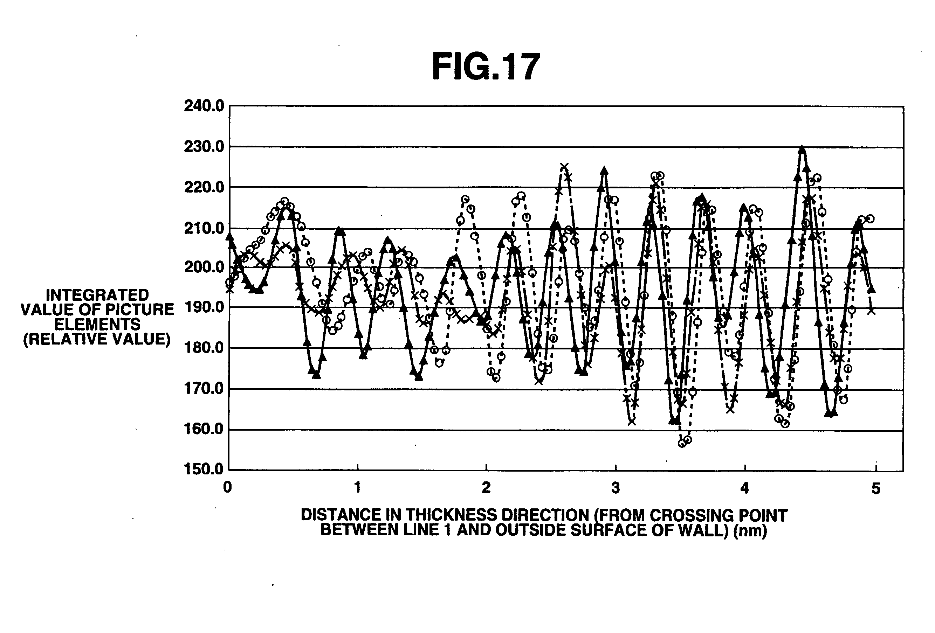

Figs. 14 and 15 are partial views of Figs. 10 and 11, respectively. Whole regions between 3 nm-spaced two parallel lines drawn on the wall of the carbon nanotube in the thickness direction thereof as shown in Figs. 14 and 15 (at 3 portions for each) were subjected to image analysis using the above method to prepare graphs. The respective graphs obtained from the image analysis are shown in Figs. 16 and 17.

As apparently recognized from Figs. 16 and 17, the difference between adjacent maximum and minimum values of the integrated value of picture elements in the inside region of the wall of the carbon nanotube was large, whereas the difference between adjacent maximum and minimum values of the integrated value of picture elements in the outside region thereof is small. This indicates that the crystallinity of the inside region of the wall of the carbon nanotube was high, and the crystallinity of the outside region thereof was low.

The ratios (B/A) calculated from Figs. 16 and 17 were 4.21, 1.45, 1.81, 4.14, 3.30 and 2.73 all of which were larger than 1.20. This shows that the crystallinity of the inside region of the wall of the carbon nanotube was higher than that of the outside region thereof.

In addition, the ratios (D/C) calculated from Figs. 16 and 17 were 3.45, 1.41, 2.18, 3.94, 3.42 and 2.33 all of which were larger than 1.20. This also shows that the crystallinity of the inside region of the wall of the carbon nanotube was higher than that of the outside region thereof.

### Comparative Example 1:

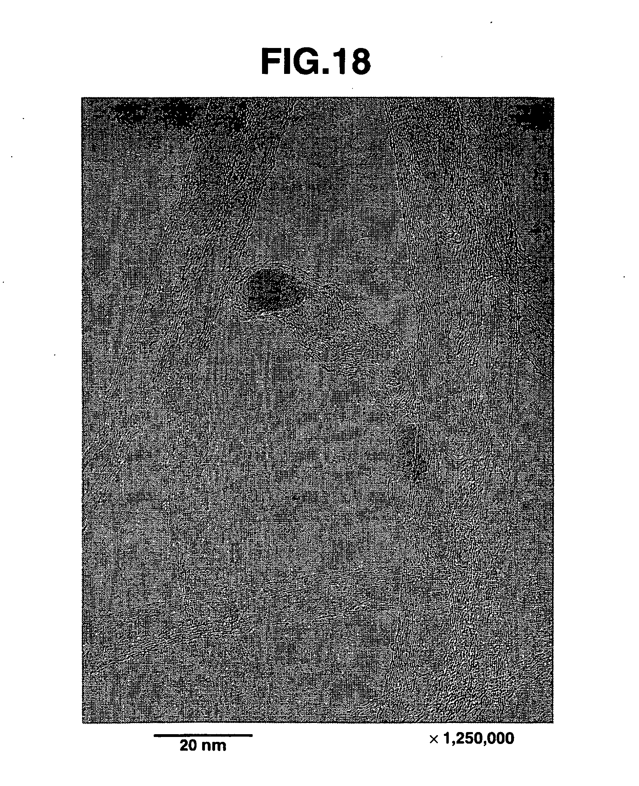

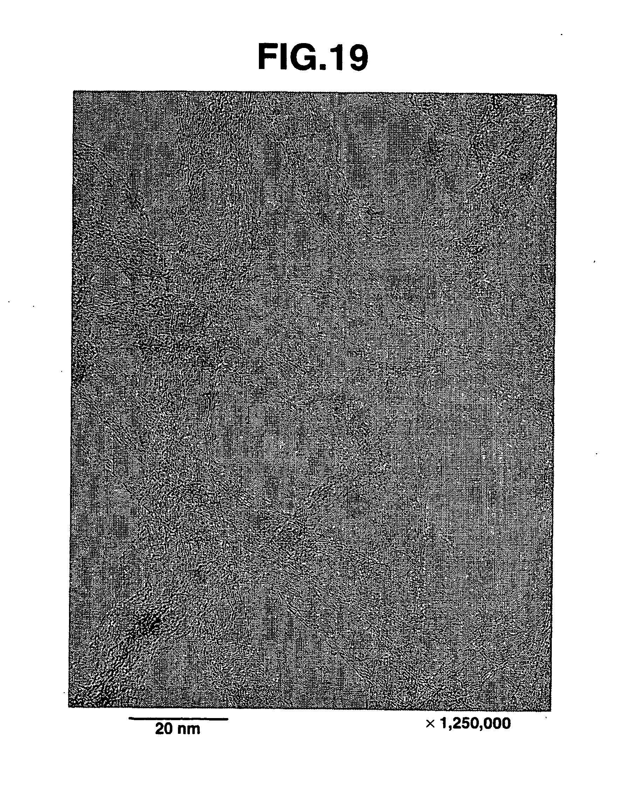

TEM images of a CC type of commercially available carbon nanotubes "Graphite Fibrils (registered trademark)" produced by Hyperion Catalysts International, Inc. using a gas phase method, are shown in Figs. 18 and 19. From these TEM images, there were observed many shades due to metals contained in the carbon nanotubes.

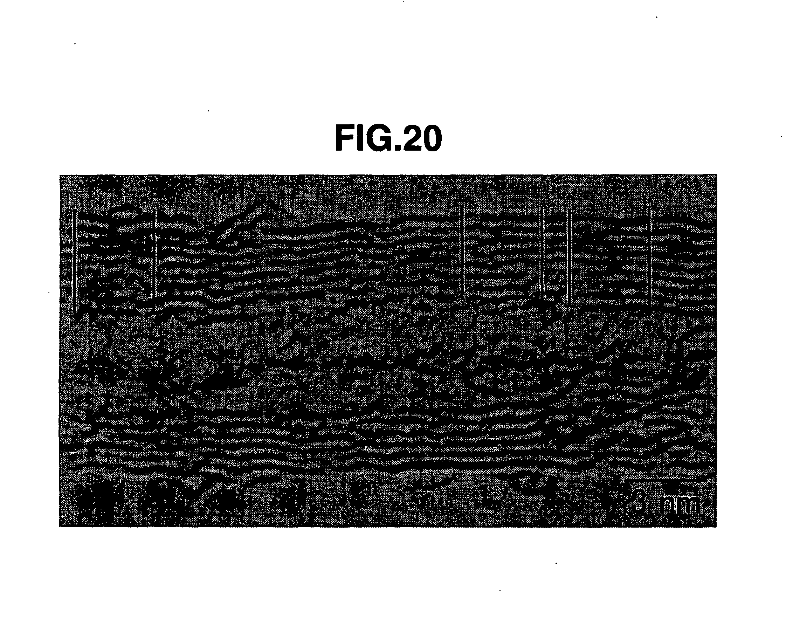

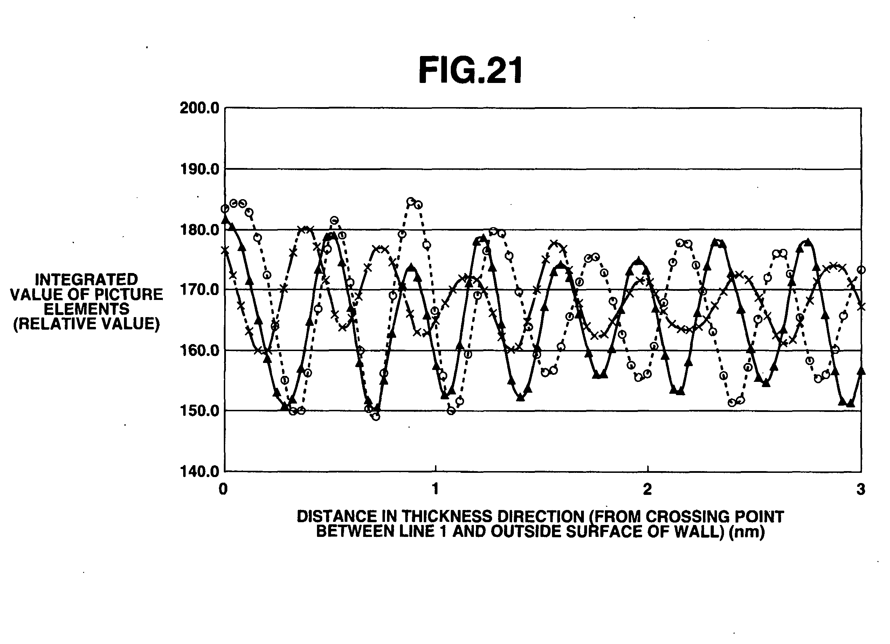

Fig. 20 is a partial view of Fig. 18. A whole region between 3 nm-spaced two parallel lines drawn on the wall of the carbon nanotube in the thickness direction thereof as shown in Fig. 20 (at 3 portions) were subjected to image analysis using the above method to prepare a graph. The graph obtained from the image analysis is shown in Fig. 21.

The ratios (B/A) calculated from Fig. 21 were 0.67, 0.68 and 0.80 all of'which were smaller than 1.20. This indicates that the crystallinity of the inside region of the wall of the carbon nanotube was not higher than that of the outside region thereof.

In addition, the ratios (D/C) calculated from Fig. 21 were 0.76, 0.77 and 0.98 all of which were smaller than 1.20. This also indicates that the crystallinity of the inside region of the wall of the carbon nanotube was not higher than that of the outside region thereof.

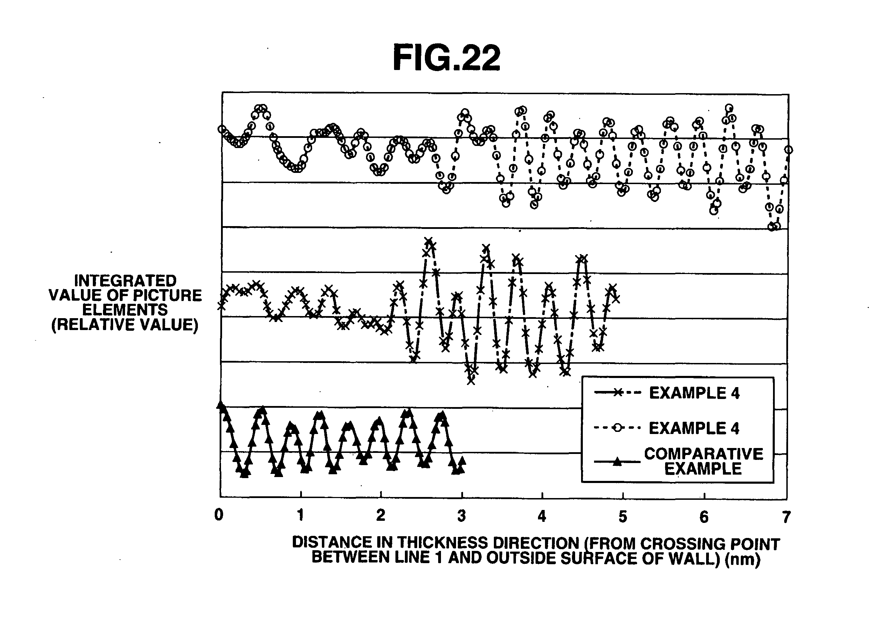

In Fig. 22, there is shown an explanatory view for comparing the graphs obtained by subjecting regions extracted from Figs. 14, 15 and 20 (one region for each) to image analysis using the above method, with each other. The data obtained from the regions extracted from Figs. 14 and 15 which were the results of Example 4, show that the difference between adjacent maximum and minimum values of the integrated value of picture elements in the inside region of the wall of the carbon nanotube was apparently larger than that in the outside region thereof. On the contrary, the data obtained from the region extracted from Fig. 20 of Comparative Example 1 show that the difference between adjacent maximum and minimum values of the integrated value of picture elements in the inside region of the wall of the carbon nanotube was not larger than that in the outside region thereof.

### INDUSTRIAL APPLICABILITY

The carbon nanotube of the present invention is a novel carbon nanotube which allows function groups to be readily introduced on the surface of a wall thereof since an outside region of the wall has an amorphous structure, and exhibits a high conductivity and a high strength since an inside region of the wall has a crystalline structure. Such a carbon nanotube of the present invention can be applied to electric conductive materials, quantum thin wire elements, superluminal electric elements, ultrahigh-density magnetic recording media, carbon membranes, nonlinear optical materials, electron emission materials, electrodes, hydrogen-absorbing materials or the like because of excellent properties thereof.

Further, the production process of the present invention is an inexpensive solid phase process capable of mass-producing the carbon nanotube at a high yield and readily controlling properties of the carbon nanotube such as outer diameter and thickness thereof, and is an industrially useful process capable of producing such a carbon nanotube that is free from inclusion of metal components.

## Claims

1. A carbon nanotube having an outer diameter of not more than 500 nm and a length of not less than 50 nm, and comprising a wall including an outside region of an amorphous structure and an inside region of a crystalline structure.

2. A carbon nanotube according to claim 1, wherein said carbon nanotube has a ratio of B to A (B/A) of not less than 1.20 wherein A and B are values obtained by an image analysis conducted according to the following procedures using a transmission electron microscope image of the carbon nanotube which has a magnification of not less than 1,000,000 times and a distance between adjacent picture elements of not more than 0.06 nm, and respectively have the following definitions:
(1) Drawing two parallel lines (referred to as "line 1" and "line 2", respectively) on the wall of the carbon nanotube observed on the transmission electron microscope image in the thickness direction of the wall, said lines being spaced by 3 nm apart from each other;
(2) plotting a distance (L) extending from a crossing point between the line 1 and an outside surface of the wall in the thickness direction of the wall, on an abscissa, and plotting an integrated value (P) of densities of picture elements existing on a line perpendicular to the line 1 which extends from a point on the line 1 corresponding to the distance (L) plotted on the abscissa until contacting with the line 2, on an ordinate, to prepare a graph showing relationship between the distance (L) and the integrated value (P) of densities of picture elements; and
(3) in the graph, A is defined as an average value of differences between adjacent maximum and minimum values of the integrated value (P) of densities of picture elements in a thickness region of up to 20% when measured from the outside surface of the wall, and B is defined as an average value of differences of adjacent maximum and minimum values of the integrated value (P) of densities of picture elements in a thickness region of 50 to 100% when measured from the outside surface of the wall.

3. A carbon nanotube according to claim 1, wherein said carbon nanotube has a ratio of D to C (D/C) of not less than 1.20 wherein C and D are values obtained by an image analysis conducted according to the following procedures using a transmission electron microscope image of the carbon nanotube which has a magnification of not less than 1,000,000 times and a distance between adjacent picture elements of not more than 0.06 nm, and respectively have the following definitions:
(1) Drawing two parallel lines (referred to as "line 1" and "line 2", respectively) on the wall of the carbon nanotube observed on the transmission electron microscope image in the thickness direction of the wall, said lines being spaced by 3 nm apart from each other;
(2) plotting a distance (L) extending from a crossing point between the line 1 and an outside surface of the wall in the thickness direction of the wall, on an abscissa, and plotting an integrated value (P) of densities of picture elements existing on a line perpendicular to the line 1 which extends from a point on the line 1 corresponding to the distance (L) plotted on the abscissa until contacting with the line 2, on an ordinate, to prepare a graph showing relationship between the distance (L) and the integrated value (P) of densities of picture elements; and
(3) in the graph, C is defined as an average value of differences between adjacent maximum and minimum values of the integrated value (P) of densities of picture elements in a thickness region of up to 1.5 nm when measured from the outside surface of the wall, and D is defined as an average value of differences of adjacent maximum and minimum values of the integrated value (P) of densities of picture elements in a thickness region extending inwardly from 2.0 nm when measured from the outside surface of the wall.

4. A carbon nanotube according to claim 1, wherein a total content of transition metal elements, Group 13 elements and lanthanoid elements in the carbon nanotube is not more than 0.5% by weight.

5. A carbon nanotube according to claim 1, wherein said carbon nanotube is produced by a solid phase method.

6. A process for producing a carbon nanotube, comprising:
melt-spinning particles having an average particle diameter of 10 to 10,000 nm and a Cv value of particle diameter of not more than 30% which are prepared by coating respective heat-decomposable and dissipatable fine resin particles with a carbon precursor resin;
adequately subjecting the resultant melt-spun product to infusibilization treatment; and
heat-calcining the obtained product for carbonization treatment thereof.

7. A process for producing a carbon nanotube, comprising:
dispersing particles having an average particle diameter of 10 to 10,000 nm and a Cv value of particle diameter of not more than 30% which are prepared by coating respective heat-decomposable and dissipatable fine resin particles with a carbon precursor resin, in a matrix resin capable of being decomposed and dissipated by heating to prepare a dispersion;
melt-spinning the obtained dispersion;
adequately subjecting the resultant melt-spun product to infusibilization treatment; and
heat-calcining the obtained product for carbonization treatment thereof.

8. A process according to claim 6 or 7, wherein the heat-decomposable and dissipatable fine resin particles are formed by chemical growth using a polymerization method.

9. A process according to claim 6 or 7, wherein the particles prepared by coating with the carbon precursor resin are formed by chemically coating the fine resin particles with the carbon precursor resin.

10. A process according to claim 6 or 7, wherein the particles prepared by coating the heat-decomposable and dissipatable fine resin particles with the carbon precursor resin, are obtained by polymerizing a monomer of the heat-decomposable and dissipatable resin, and then successively charging a monomer of the carbon precursor resin to the resultant resin to chemically coat the resin with the carbon precursor resin.

11. A process according to claim 6 or 7, wherein the carbonization treatment by heat-calcination after the melt-spinning is conducted at a temperature of not more than 1,500°C.

12. A process for producing a carbon nanotube, comprising:
chemically coating a surface of respective heat-decomposable and dissipatable fine resin particles which are produced by chemical growth using a polymerization method, with a carbon precursor resin;
dispersing the resultant coated particles in a matrix resin capable of being decomposed and dissipated by heating to prepare a dispersion;
melt-spinning the resultant dispersion;
adequately subjecting the resultant melt-spun product to infusibilization treatment; and
heat-calcining the obtained product for carbonization treatment thereof.

13. A process according to claim 12, wherein the carbonization treatment by heat-calcination after the melt-spinning is conducted at a temperature of not more than 1,500°C.

14. A process for producing a carbon nanotube, comprising:
polymerizing a monomer of a heat-decomposable and dissipatable resin;
charging and polymerizing a component containing a monomer of a carbon precursor resin;
further charging and polymerizing the monomer of the heat-decomposable and dissipatable resin to obtain fine particles;
melt-spinning the obtained fine particles;
adequately subjecting the resultant melt-spun product to infusibilization treatment; and
heat-calcining the obtained product for carbonization treatment thereof.

15. A process according to claim 14, wherein the carbonization treatment by heat-calcination after the melt-spinning is conducted at a temperature of not more than 1,500°C.

16. A process for producing a carbon nanotube, comprising:
coating heat-decomposable and dissipatable fine resin particles with a carbon precursor resin;
coating the resultant particles with the heat-decomposable and dissipatable resin;
melt-spinning the obtained coated particles;
adequately subjecting the resultant melt-spun product to infusibilization treatment; and
heat-calcining the obtained product for carbonization treatment thereof.

17. A process according to claim 16, wherein the carbonization treatment by heat-calcination after the melt-spinning is conducted at a temperature of not more than 1,500°C.
